# EUROPÄISCHE PATENTSCHRIFT

(11) **EP 1 713 961 B1**
(45) Veröffentlichungstag und Bekanntmachung des Hinweises auf die Patenterteilung: **05.05.2010**
(21) Anmeldenummer: 04804373.1
(22) Anmeldetag: 29.12.2004
(51) Int. Cl.: D01H 4/14, F16C 39/06

(54) **ROTORSCHAFT EINES SPINNROTORS**
ROTOR SHAFT OF A SPINNING ROTOR
ARBRE DE ROTOR DE FILATURE

(30) Priorität: 06.02.2004 DE 102004005846
(43) Veröffentlichungstag der Anmeldung: 25.10.2006
(73) Patentinhaber: Oerlikon Textile GmbH & Co. KG, 42897 Remscheid (DE)
(72) Erfinder: BÜHREN, Stephan, 41366 Schwalmtal (DE)
(74) Vertreter: Hamann, Arndt
(86) Internationale Anmeldenummer: PCT/EP2004/014787
(87) Internationale Veröffentlichungsnummer: WO 2005/075719

(56) Entgegenhaltungen:
- EP-A- 0 332 979
- DE-A1- 2 640 111
- DE-A1- 10 032 440
- DE-A1- 19 827 606

## Beschreibung

Die Erfindung betrifft einen Rotorschaft eines Spinnrotors gemäß dem Oberbegriff des Anspruches 1.

Im Zusammenhang mit Offenend- Rotorspinnmaschinen sind Spinnrotoren sowie deren Lagerung in verschiedenen Ausführungsformen bekannt und in der Patentliteratur ausführlich beschrieben.
Derartige Spinnrotoren laufen bekanntlich während des Spinnprozesses mit hoher Drehzahl in einem unterdruckbeaufschlagten Rotorgehäuse um.
Die Mehrzahl der auf dem Markt befindlichen Offenend-Spinnmaschinen weist dabei Spinnrotoren auf, die mit ihrem Rotorschaft im Lagerzwickel einer sogenannten Stützscheibenlagerung gelagert sind.
Bei solchen Stützscheibenlagerungen, die Rotordrehzahlen > 100.000 Umdrehungen pro Minute ermöglichen, ist es üblich, zur axialen Fixierung des Spinnrotors ein zusätzliches Axiallager vorzusehen, das entweder als mechanisches Lager oder als Magnetlager ausgebildet sein kann.

Wenngleich sich diese Stützscheibenlageranordnungen in der Praxis bewährt haben, weisen sie doch den Nachteil auf, dass die Stützscheiben, insbesondere im Bereich ihrer Laufflächen, mechanisch erheblich beansprucht werden.
Die in diesen Bereichen auftretende Walkarbeit führt dabei nicht nur zu einem nicht unerheblichen Verschleiß der Laufbeläge der Stützscheiben, sondern auch zu Energieverlusten.

Es sind deshalb in der Vergangenheit bereits Versuche unternommen worden, derartige, mit hoher Drehzahl umlaufende Spinnrotoren verschleißfrei zu lagern.

In der DE 198 27 606 A1 sind beispielsweise einzelmotorisch angetriebene Spinnrotoren beschrieben, die berührungslos in entsprechenden Magnetlageranordnungen abgestützt sind.
Diese magnetischen Lageranordnungen weisen dabei jeweils sowohl statorseitig als auch rotorseitig einen ringförmig ausgebildeten Permanentmagneten auf.
Die Permanentmagnete sind dabei so angeordnet, daß zwischen den Rotormagneten und den Statormagneten abstoßende magnetische Lagerkräfte wirksam sind.

Im Bereich der Permanentmagneten des Stators sind außerdem elektrische Wicklungen vorgesehen, durch die in Abhängigkeit der elektrischen Stromflußrichtung die Magnetkraft der Statormagneten verstärkt oder abgesenkt werden kann.
Die elektrischen Wicklungen werden dabei über eine entsprechende Regeleinrichtung in Abhängigkeit von Signalen eines Sensors angesteuert, der z.B. die axiale Abweichung des Rotorschaftes des Spinnrotors aus seiner Soll-Lage erfaßt.

Bei der Magnetlageranordnung gemäß DE 198 27 606 A1 sind, wie vorstehend bereits angedeutet, die mit dem Spinnrotor umlaufenden Permanentmagnete ringförmig ausgebildet und in Deckelelemente eingelassen, die ihrerseits drehfest mit dem Rotorschaft des Spinnrotors verbunden sind.
Diese Art der Festlegung der mit hoher Drehzahl rotierenden Permanentmagnete konnte nicht befriedigen; man ist deshalb dazu übergegangen, die ringförmigen Permanentmagnete des Rotors auf Lageransätze spezieller Aufnahmen aufzuziehen und die aufgezogenen Permanentmagnete mit einer außen liegenden Ringbandage gegen die während des Spinnbetriebes auftretenden Zentrifugalkräfte zu sichern.
Die speziellen Aufnahmen für die Permanentmagnete sind dabei drehfest am Rotorschaft festgelegt.

Bezüglich des Aufziehens der ringförmigen Permanentmagnete auf den Lageransatz einer solchen Aufnahme sowie deren Sicherung durch Ringbandagen waren bislang zwei unterschiedliche Methoden üblich.
Das heißt, die Ringmagnete wurden entweder mit Spiel auf den Lageransatz der Aufnahme geschoben und anschließend durch eine Ringbandage, deren Innendurchmesser unter dem Außendurchmesser des Ringmagneten lag, arretiert, oder auf den Ringmagneten wurden zunächst mittels einer Presspassung die Ringbandagen festgelegt und anschließend der bandagierten Ringmagneten, ebenfalls mittels Presspassung, auf den Lageransatz der zugehörigen Aufnahme gedrückt.

Bei beiden Methoden mußten die Durchmesser der Verbindungsflächen sehr eng toleriert sein, da sonst die Gefahr einer Beschädigung der relativ empfindlichen Ringmagnete während der Aufpressvorgänge bestand.
Die vorbeschriebenen Methoden erwiesen sich insgesamt als nicht sehr effektiv, da trotz enger Toleranzen nicht immer zu vermeiden war, dass Ringmagnete während des Aufpressens beschädigt wurden.
Das heißt, bei den bekannten Fertigungsmethoden war die Ausschußquote relativ hoch.

Ausgehend vom vorgenannten Stand der Technik liegt der Erfindung die Aufgabe zugrunde, einen Rotorschaft eines Spinnrotors mit drehfest angeordneten, ringförmigen Magnetlagerkomponeten zu schaffen, die so ausgebildet sind, dass diese Magnetlagerkomponenten kostengünstig und funktionssicher hergestellt werden können.

Diese Aufgabe wird erfindungsgemäß durch einen Rotorschaft eines Spinnrotors, wie er im Anspruch 1 beschrieben ist.

Vorteilhafte Ausführungsformen der Erfindung sind Gegenstand der Unteransprüche.

Die Erfindung hat insbesondere den Vorteil, dass durch die Verwendung geschlitzter Permanentmagnetringe eine begrenzte Verformbarkeit dieser Permanentmagnetringe erreicht wird, was einerseits sowohl das Aufschieben dieser Bauteile auf zugehörige Aufnahmen erleichtert, als auch deren sichere Arretierung auf den Aufnahmen durch das Aufziehen von entsprechenden Ringbandagen ermöglicht.
Das heißt, bei einer solchen Ausbildung der Permanentmagnetringe ist gewährleistet, dass die Permanentmagnetringe weder während ihrer Positionierung auf dem Lageransatz ihrer Aufnahme, noch während ihrer Arretierung durch eine Ringbandage beschädigt werden.

Da außerdem die an die Maßtoleranzen der beteiligten Bauteile gestellten Anforderungen relativ gering sind, können diese Bauteile auch kostengünstig hergestellt werden.

In bevorzugter Ausführungsform ist dabei, wie im Anspruch 2 dargelegt, vorgesehen, dass der geschlitzte Permanentmagnetring vor seinem Einbau einen Innendurchmesser aufweist, der geringfügig über dem Außendurchmesser des zugehörigen Lageransatzes der Aufnahme liegt.
Die dadurch entstehende Gleitpassung erleichtert das Aufschieben des Permanentmagnetringes auf seinen Lagersitz und schafft damit die Voraussetzung, dass Beschädigungen des geschlitzten Permanentmagnetringes bei dieser Aktion weitestgehend ausgeschlossen werden.
Da der Außendurchmesser des geschlitzten Permanentmagnetringes außerdem etwas über dem Innendurchmesser der auf dem Permanentmagnetring festzulegenden, hochzugfesten Ringbandage liegt, ist trotzdem gewährleistet, dass die geschlitzten Permanentmagnetringe nach dem Aufziehen der Ringbandagen drehfest und weitestgehend drehzahlresistent auf dem Lageransatz der Aufnahme arretiert sind.

In vorteilhafter Ausführungsform ist vorgesehen, dass der Schlitz im Permanentmagnetring so bemessen ist, dass der Permanentmagnetring nach dem Aufziehen der Ringbandage vollständig geschlossen ist (Anspr.3).
Auf diese Weise wird verhindert, dass es aufgrund des Schlitzes während des Spinnbetriebes zu einer Unwucht kommt, was angesichts der sehr hohen Drehzahlen unbedingt vermieden werden muss.

Wie im Anspruch 4 angedeutet, sind die geschlitzten Permanentmagnetringe vorteilhafter Weise auf dem Lageransatz einer speziellen Aufnahme festgelegt, die ihrerseits drehfest mit dem Rotorschaft verbunden ist.
Durch eine solche Ausbildung wird insbesondere die Montage der Permanentmagnetringe erleichtert.
Das heißt, die geschlitzten Permanentmagnetringe können zunächst in einer separaten Montageeinrichtung auf den Lageransatz spezieller Aufnahmen aufgeschoben und dort durch das Aufziehen der Ringbandagen arretiert werden.
Die kompletten Aufnahmen können anschließend relativ problemlos am Rotorschaft des Spinnrotors festgelegt werden.

In vorteilhafter Ausbildung sind die Ringbandagen, wie im Anspruch 5 dargelegt, aus einem hochzugfesten Werkstoff, vorzugsweise Kohlefaser verstärktem Kunststoff, gefertigt. Solche CFK-Ringbandagen sind einerseits erheblich zugfester als vergleichbare Stahlbandagen und zudem deutlich leichter, was sich durch das niedrige Schwungmoment beispielsweise positiv auf das Beschleunigungsvermögen des einzelmotorischen Rotorantriebes auswirkt.

Die Erfindung wird nachfolgend anhand eines in den Zeichnungen dargestellten Ausführungsbeispieles näher erläutert.

Es zeigt:
- Fig. 1: in Seitenansicht eine Offenend-Spinnvorrichtung mit einem einzelmotorisch angetriebenen Spinnrotor, der mit seinem Rotorschaft in einer Magnetlageranordnung abgestützt ist,
- Fig. 2: den Rotorschaft eines Spinnrotors mit den am Rotorschaft festgelegten Magnetlagerkomponenten,
- Fig. 3: den Rotorschaft gemäß Ansicht Pfeil X der Fig. 2,
- Fig. 4: eine am Rotorschaft festgelegte, mit einem geschlitzten Permanentmagnetring und einer Ringbandage bestückten Aufnahme, gemäß Schnitt IV-IV der Fig. 3.

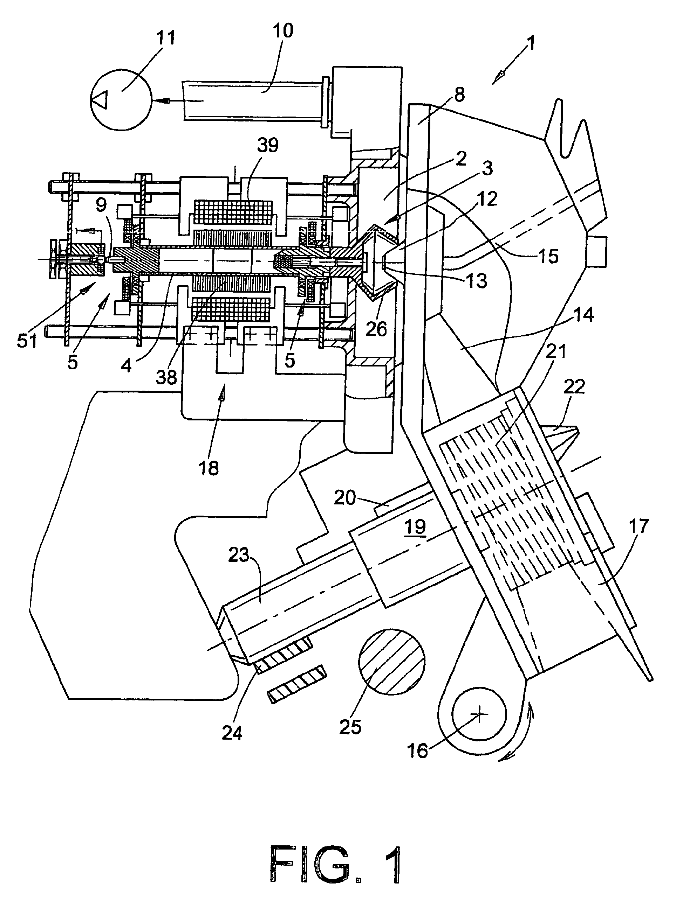

In Fig. 1 ist eine Offenend-Spinnvorrichtung einer Offenend-Rotorspinnmaschine dargestellt und mit der Bezugszahl 1 gekennzeichnet.
Derartige, an sich bekannte Offenend-Spinnvorrichtungen 1 verfügen jeweils über ein Rotorgehäuse 2, in dem die Spinntasse 26 eines Spinnrotors 3 mit hoher Drehzahl umläuft. Der Spinnrotor 3 wird dabei durch einen elektromotorischen Einzelantrieb 18 angetrieben und ist mit seinem Rotorschaft 4 in Magnetlageranordnungen 5 abgestützt, deren Permanentmagnetlagerkomponenten den Rotorschaft 4 sowohl radial als auch axial abstützen.
Bei der dargestellten Ausführungsform ist neben den Magnetlageranordnungen 5 noch ein rückseitiger Lagesensor 51 vorgesehen.
Der Aufbau und die Funktion derartiger Lagesensoren 51 sind Stand der Technik und beispielsweise in der DE 100 22 736 A1 ausführlich beschrieben.

Wie bekannt, ist das an sich nach vorne hin offene Rotorgehäuse 2 während des Betriebes durch ein schwenkbares Deckelelement 8 verschlossen und über eine entsprechende Pneumatikleitung 10 an eine Unterdruckquelle 11 angeschlossen, die den im Rotorgehäuse 2 notwendigen Spinnunterdruck erzeugt. Im Deckelement 8 beziehungsweise in der Kanalplatte ist, wie ebenfalls üblich, ein Kanalplattenadapter 12 angeordnet, der eine Fadenabzugsdüse 13 sowie den Mündungsbereich eines Faserleitkanales 14 aufweist. An die Fadenabzugsdüse 13 schließt sich dabei ein Fadenabzugsröhrchen 15 an.

Im dargestellten Ausführungsbeispiel ist das Deckelelement 8 um eine Schwenkachse 16 begrenzt drehbar gelagert und besitzt ein Auflösewalzengehäuse 17.
Außerdem weist das Deckelelement 8 rückseitige Lagerkonsolen 19, 20 zur Lagerung einer Auflösewalze 21 beziehungsweise eines Faserbandeinzugszylinders 22 auf.
Die Auflösewalze 21 wird dabei im Bereich ihres Wirtels 23 durch einen umlaufenden, maschinenlangen Tangentialriemen 24 angetrieben, während der (nicht dargestellte) Antrieb des Faserbandeinzugszylinders 22 beispielsweise über eine Schneckengetriebeanordnung erfolgt, die auf eine maschinenlange Antriebswelle 25 geschaltet ist.

In alternativer Ausführungsform können die Auflösewalze 21 und/oder der Faserbandeinzugszylinder 22 selbstverständlich auch durch elektromotorische Einzelantriebe, beispielsweise Schrittmotoren, angetrieben werden.

Der in den Magnetlageranordnungen 5 frei drehbar gelagerte Spinnrotor 3 ist, wie vorstehend bereits angedeutet, ebenfalls mittels eines elektromotorischen Einzelantriebes 18 antreibbar.
Der Einzelantrieb 18 des Spinnrotors 3 weist dabei vorzugsweise einen permanentmagnetischen Rotormagneten 38 sowie eine definiert bestrombare Statorspule 39 auf.

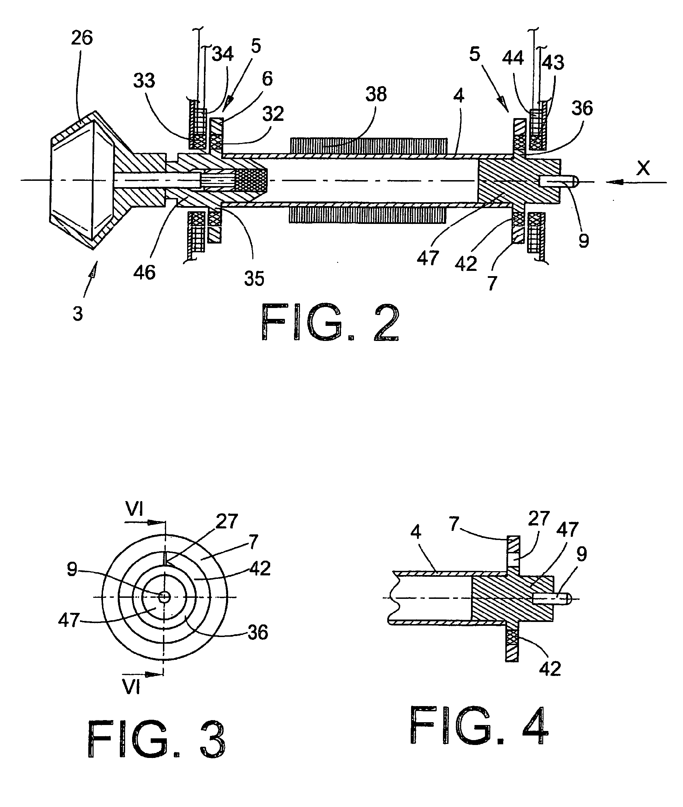

Die Magnetlageranordnungen 5 bestehen im wesentlichen, wie insbesondere in Fig. 2 angedeutet, aus den Magnetlagerkomponenten 32, 33, 34 beziehungsweise den Magnetlagerkomponenten 42, 43, 44.

Die mit dem Spinnrotor 3 umlaufenden Magnetlagerkomponenten sind dabei erfindungsgemäß als geschlitzte Permanentmagnetringe 32, 42 ausgebildet, die jeweils auf einem Lageransatz 35 beziehungsweise 36 von mit dem Rotorschaft 4 drehfest verbundenen Aufnahmen 46 beziehungsweise 47 aufgeschoben und dort durch Ringbandagen 6 beziehungsweise 7 arretiert sind.
Mit 33 bzw. 43 sind die stationären Permanentmagnetringe der Lagereinrichtungen 5 bezeichnet, deren Magnetkraft mittels entsprechender Elektromagnetspulen 34 bzw. 44 definiert, vorzugsweise in Abhängigkeit eines entsprechenden Signals des Lagesensors 51, einstellbar ist.

Die am Rotorschaft 4 festgelegten, geschlitzten Permanentmagnetringe 32, 42 weisen vor ihrer Montage vorzugsweise einen Innendurchmesser RMᵢₙₙₑₙ auf, der geringfügig über dem Außerdurchmesser A_{außen} des Lageransatzes 35 beziehungweise 36 der Aufnahmen 46 beziehungsweise 47 liegt. Das heißt, die Permanentmagnetringe 32, 42 können problemlos auf den Lageransatz 35 beziehungsweise 36 der Aufnahmen 46 beziehungsweise 47 aufgeschoben und dort durch das Aufziehen einer hochzugfesten Ringbandage 6 beziehungsweise 7 arretiert werden.

Die Ringbandagen 6, 7 sind dabei vorzugsweise aus kohlefaserverstärktem Kunststoff gefertigt und weisen einen Innendurchmesser RBᵢₙₙₑₙ auf, der etwas unter dem Außendurchmesser RM_{außen} der Permanentmagnetringe liegt.
Das bedeutet, durch das Aufziehen der Ringbandagen 6 bzw. 7 können die Permanentmagnetringe 32 bzw. 42, die aufgrund ihres Schlitzes 27 eine gewisse Verformbarkeit aufweisen, gegen die Lageransätze 35 bzw. 36 der Aufnahmen 46 bzw. 47 gedrückt und dabei sicher arretiert werden.

## Patentansprüche

1. Rotorschaft eines Spinnrotors mit einer ringförmigen Magnetlagerkomponente, die gegenüber der während des Spinnprozesses wirksamen Zentrifugalkraft durch eine Ringbandage gesichert ist, für die radiale und axiale Abstützung des Rotorschaftes, wobei die rotierbare Magnetlagerkomponente mit einer stationär angeordneten Magnetlagerkomponente zusammenwirkt,
**dadurch gekennzeichnet,**
**dass** die mit dem Rotorschaft (4) des Spinnrotors (3) verbundene Magnetlagerkomponente als geschlitzter Permanentmagnetring (32, 42) ausgebildet ist, um eine für das Aufziehen einer Ringbandage (6, 7) erforderliche Verformbarkeit zu gewährleisten.

2. Rotorschaft nach Anspruch 1, **dadurch gekennzeichnet, dass** der geschlitzte Permanentmagnetring (32, 42) vor seinem Einbau einen Innendurchmesser (RMᵢₙₙₑₙ) aufweist, der geringfügig über dem Außendurchmesser (A_{außen}) des Lageransatzes (35, 36) einer Aufnahme (46, 47) liegt und einen Außendurchmesser (RM_{außen}) besitzt, der über dem Innendurchmesser (RBᵢₙₙₑₙ) der Ringbandage (6, 7) liegt.

3. Rotorschaft nach Anspruch 1, **dadurch gekennzeichnet, dass** der Schlitz (27) so bemessen ist, dass der Permanentmagnetring (32, 42) nach dem Aufziehen der Ringbandage (6, 7) vollständig geschlossen ist.

4. Rotorschaft nach Anspruch 1, **dadurch gekennzeichnet, dass** der geschlitzte Permanentmagnetring (32, 42) auf einem Lageransatz (35, 36) einer mit dem Rotorschaft (4) drehfest verbundenen Aufnahme (46, 47) arretiert ist.

5. Rotorschaft nach Anspruch 1, **dadurch gekennzeichnet, daß** die Ringbandage (6, 7) aus einem hochzugfesten Werkstoff, vorzugsweise einem kohlefaserverstärkten Kunststoff (CFK), gefertigt ist.

## Claims

1. Rotor shaft of a spinning rotor with an annular magnetic bearing component, which is secured with respect to the centrifugal force effective during the spinning process by a ring liner, for radially and axially supporting the rotor shaft, wherein the rotatable magnetic bearing component interacts with a stationary magnetic bearing component,
**characterised in that**
the magnetic bearing component connected to the rotor shaft (4) of the spinning rotor (3) is configured as a slotted permanent magnet ring (32, 42), in order to ensure the deformability required to draw on a ring liner (6, 7).

2. Rotor shaft according to claim 1, **characterised in that** the slotted permanent magnet ring (32, 42), prior to its installation, has an internal diameter (RMᵢₙₜₑᵣₙₐₗ), which is slightly above the external diameter (Aₑₓₜₑᵣₙₐₗ) of the bearing lug (35, 36) of a mount (46, 47) and has an external diameter (RMₑₓₜₑᵣₙₐₗ), which is above the internal diameter (RBᵢₙₜₑᵣₙₐₗ) of the ring liner (6, 7).

3. Rotor shaft according to claim 1, **characterised in that** the slot (27) is dimensioned such that the permanent magnet ring (32, 42) is completely closed after drawing on the ring liner (6, 7).

4. Rotor shaft according to claim 1, **characterised in that** the slotted permanent magnet ring (32, 42) is locked on a bearing lug (35, 36) of a mount (46, 47) which is connected in a rotationally engaged manner to the rotor shaft (4).

5. Rotor shaft according to claim 1, **characterised in that** the ring liner (6, 7) is manufactured from a material guaranteeing high tensile strength, preferably a carbon fibre-reinforced plastic material (CFRP).

## Revendications

1. Arbre de rotor d'un rotor de filature comprenant un élément de palier magnétique de forme annulaire qui est protégé par une garniture annulaire contre la force centrifuge active pendant le processus de filature et qui sert au soutien radial et axial de l'arbre de rotor, l'élément de palier magnétique rotatif coopérant avec un élément de palier magnétique stationnaire,
**caractérisé en ce**
**que** l'élément de palier magnétique relié à l'arbre de rotor (4) du rotor de filature (3) est réalisé sous la forme d'une bague rainurée à aimantation permanente (32, 42) pour garantir la déformabilité requise pour le montage d'une garniture annulaire (6, 7).

2. Arbre de rotor selon la revendication 1, **caractérisé en ce que** la bague rainurée à aimantation permanente (32, 42) présente avant son montage un diamètre intérieur (RM_{int.}) qui est légèrement supérieur au diamètre extérieur (A_{ext.}) de l'épaulement d'appui (35, 36) d'un support (46, 47) et possède un diamètre extérieur (RM_{ext.}) qui est supérieur au diamètre intérieur (RB_{int.}) de la garniture annulaire (6, 7).

3. Arbre de rotor selon la revendication 1, **caractérisé en ce que** la fente (27) est dimensionnée de façon que la bague à aimantation permanente (32, 42) soit complètement fermée après le montage de la garniture annulaire (6, 7).

4. Arbre de rotor selon la revendication 1, **caractérisé en ce que** la bague rainurée à aimantation permanente (32, 42) est bloquée sur un épaulement d'appui (35, 36) d'un support (46, 47) solidaire en rotation de l'arbre de rotor (4).

5. Arbre de rotor selon la revendication 1, **caractérisé en ce que** la garniture annulaire (6, 7) est réalisée dans un matériau à haute résistance à la traction, de préférence dans une matière plastique renforcée par fibres de carbone (CFK).
